# EUROPÄISCHE PATENTSCHRIFT

(11) **EP 3 978 735 B1**
(45) Veröffentlichungstag und Bekanntmachung des Hinweises auf die Patenterteilung: **05.06.2024**
(21) Anmeldenummer: 21189779.8
(22) Anmeldetag: 05.08.2021
(51) Int. Cl.: F01N 3/32, F01N 3/20, F23J 15/00, F23J 15/06

(54) **VORRICHTUNG UND VERFAHREN ZUR ABGASREINIGUNG VON BRENNERN MITTELS SCR**
DEVICE AND METHOD FOR PURIFYING WASTE GAS OF BURNERS BY MEANS OF SCR
DISPOSITIF ET PROCÉDÉ DE PURIFICATION DES GAZ D'ÉCHAPPEMENT DE BRÛLEURS AU MOYEN DE SCR

(30) Priorität: 02.10.2020 DE 102020125821
(43) Veröffentlichungstag der Anmeldung: 06.04.2022
(73) Patentinhaber: NOXMAT GmbH, 09569 Oederan (DE)
(72) Erfinder: Rakette, Roland, 09599 Freiberg (DE); Arnold, Jörg, 09112 Chemnitz (DE); Grämer, Tobias, 09599 Freiberg (DE)
(74) Vertreter: Witte, Weller & Partner Patentanwälte mbB

(56) Entgegenhaltungen:
- DE-A1-102010 020 277
- DE-C1- 19 856 366
- US-A- 6 146 605

## Beschreibung

Die Erfindung betrifft eine Vorrichtung zur Abgasreinigung eines Brenners, mit einer Mischeinrichtung, in der ein flüssiges Additiv, insbesondere eine Harnstoff-Wasser-Lösung, in das Abgas eindüsbar ist, und wobei der Ausgang der Mischeinrichtung mit einem Katalysator zur NOx-Reduktion mittels SCR gekoppelt ist.

Während im Automobilbereich eine Abgasreinigung zur NOx-Reduktion durch SCR (Selective Catalytic Reaction, selektive katalytische Reduktion) allgemein üblich ist, werden derartige Verfahren in direkter Kopplung bei Industriebrennern bislang nicht verwendet.

Im Automobilbereich sind zahlreiche Veröffentlichungen zur Abgasreinigung von Brennkraftmaschinen bekannt, die sich mit diversen Problemen der Abgasreinigung beschäftigen. Hierzu seien beispielhaft die EP 0 953 739 A2, die DE 10 2005 015 479 A1, die DE 10 2013 224 739 A1, die WO 2014/124797 A1, die DE 20 2011 002 317 U1, die DE 10 2016 216 366 A1 und die DE 20 2006 011 281 U1 genannt.

Jedoch sind SCR-Systeme aus dem Automobilbereich nicht ohne weiteres auf den Bereich von Brennern übertragbar, da Brenner im stationären Dauerbetrieb arbeiten und die Abgastemperaturen teilweise erheblich höher sind als im Automobilbereich.

Von den Herren Wolf und Rakette wurde auf dem Symposium THERMPROCESS in Düsseldorf, 26.-28. Juni 2019 in einem Vortrag eine Anwendung eines SCR-Systems auf den Brenner ETAMAT erläutert. Der Brenner ETAMAT wird von der Firma NOXMAT GmbH, Oederan, Deutschland, vertrieben und ist somit durch Benutzung bekannt.

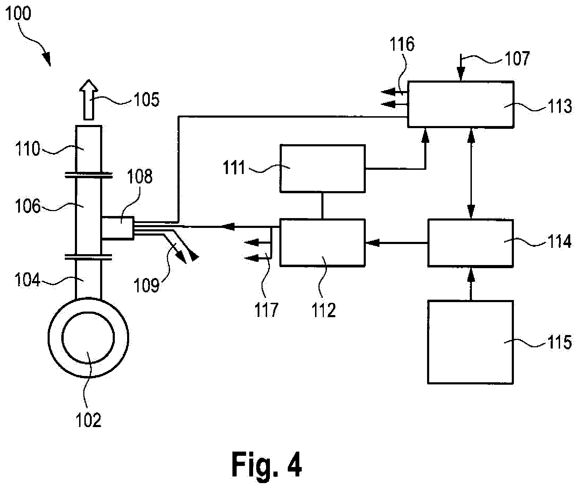

In dem oben erwähnten Vortrag wurde ein Brenner mit SCR-Abgasreinigung vorgeschlagen, der in Fig. 4 dargestellt ist. Das in dem Vortrag dargestellte System mit Abgasreinigung ist in Fig. 4 insgesamt mit der Ziffer 100 bezeichnet. Die Vorrichtung weist einen Brenner 102 des Typs ETAMAT auf, siehe oben. Auf Grund des sehr hohen Wirkungsgrades ergibt sich bei diesem Brenner eine Abgastemperatur von etwa 250 bis 350°C. Aus dem Brenner 102 tritt eine Abgasleitung 104 aus, an welche sich eine Mischeinrichtung 106 mit einer Zuführeinrichtung 108 mit einer Düse zur Eindüsung einer Harnstofflösung aus einem Tank 115 aufweist. An die Mischeinrichtung 106 schließt sich ein Katalysator 110 an, aus dem das Abgas bei 105 austritt. Eine Steuerung 113 ist mit einer Pumpe 114 gekoppelt, über die aus dem Tank 115 eine Harnstofflösung gefördert wird. Mit der Pumpe 114 wird die Harnstofflösung in einen Druckspeicher 112 gefördert, dessen Druck mittels eines Druckwächters 111 überwacht wird. Die Steuerung 113 wird mit externen Signalen 107 versorgt. Über die Steuerung 113 sind weitere Eindüsungen von Harnstofflösung in die Zuführeinrichtung 108 gesteuert, wie bei 117 angedeutet. Die Zuführeinrichtung 108 ist mittels Kühlluft 109 gekühlt.

Eine derartige Abgasbehandlung erscheint vielversprechend für die NOx-Reduzierung des Abgases von Brennern.

Allerdings ergeben sich eine Reihe von Problemen:
SCR-Katalysatoren (beispielsweise sogenannte VWT-Katalysatoren) arbeiten effektiv nur in einem optimalen Temperaturbereich von 250 bis etwa 350°C. Dabei muss zur Erzielung von hohen NOx-Reduktionsraten ein möglichst homogenes Gemisch aus Abgas und eingedüstem Reduktionsmittel auf engem Raum erzeugt werden.

Bei höheren Abgasaustrittstemperaturen (über 400 bis etwa 500°C) ergeben sich besondere Probleme, da die Haltbarkeit des Katalysators reduziert wird und auch die Wirksamkeit des Katalysators deutlich geringer ist. Je höher die Temperatur des durch den Katalysator strömenden Abgases ist, desto größer ist die Gefahr der Zerstörung der katalytisch wirkenden Beschichtung im Katalysator. Der Arbeitstemperaturbereich etwa eines Katalysators des Typs VWT liegt bei 180 bis 500°C, vorzugsweise 200 bis 400°C, insbesondere bei 250 bis 350°C für eine optimale Wirkung. Somit lässt sich der beschriebene VWT-Katalysator mit einem Brenner des Typs ETAMAT gut kombinieren, ist allerdings für übliche Brenner anderer Art, die einen deutlich niedrigen Wirkungsgrad und damit entsprechend höhere Abgastemperaturen aufweisen, nicht geeignet.

Aus der DE 10 2009 026 240 A1 ist eine Gasturbine bekannt, die mit einer SCR-Abgasreinigung zur Verringerung der NOx-Emissionen versehen ist. Hierbei wird das Abgas mittels eines Wärmetauschers auf eine geeignete Abgastemperatur abgekühlt, bei dem sich der SCR-Katalysator mit hoher Wirksamkeit betreiben lässt.

Ein auch hierbei ungelöstes Problem besteht darin, dass eine Harnstoff-Wasser-Lösung kristalline Ausscheidungen in Form von harten Partikeln (salzähnliche Ablagerungen) im Eindüsbereich bildet, die im Laufe der Zeit zu einer Behinderung der Eindüsung und damit zu einer Verschlechterung der Reduktion des NOx führen. Außerdem besteht die Gefahr einer Überhitzung der Einspritzdüse, selbst wenn diese gekühlt wird.

Aus der DE 10 2010 020 277 A1 ist eine Verbrennungsanlage sowie ein Verfahren zur Reduzierung von Stickoxiden im Rauchgas einer Verbrennungsanlage bekannt, mit einer Mischeinrichtung, in der ein flüssiges Additiv, in das Rauchgas eindüsbar ist, wobei der Ausgang der Mischeinrichtung mit einem Katalysator zur NOx-Reduktion mittels SCR gekoppelt ist, wobei die Mischeinrichtung ein Mischrohr mit einem Eingang und einem Ausgang aufweist, das einen bevorzugt seitlich angeordneten Einlass zur Zuführung des Additivs und zur Zuführung von Kühlluft aufweist.

Mit einer derartigen Ausführung lässt sich eine deutliche Reduzierung der Stickoxide im Abgas erzielen. Problematisch bleibt es hierbei, eine ausreichende Kühlung im Bereich des Mischrohrs zu gewährleisten und eine optimale Einstellung zu gewährleisten, um kristalline Ausscheidungen in Form von harten Partikeln im Bereich der Additivzuführung zu vermeiden.

Aus der DE 198 56 366 C1 ist es bekannt, zur Stickoxidreduktion im Abgas einer Verbrennungskraftmaschine eine seitliche Zuführung einer Harnstofflösung über ein Mischrohr mit einem Ringspalt vorzusehen, in den zusätzlich Kühlluft zugeführt wird.

Eine Übertragung der bei einer Verbrennungskraftmaschine bekannten Maßnahmen auf einen Brenner ist wegen der unterschiedlichen Temperaturniveaus und Leistungscharakteristiken nicht ohne Weiteres möglich.

Vor diesem Hintergrund liegt der Erfindung die Aufgabe zugrunde, eine Vorrichtung zur Abgasreinigung eines Brenners mittels SCR zu schaffen, mit der die vorstehend beschriebenen Probleme zumindest teilweise reduziert werden. Insbesondere soll eine möglichst wirksame NOx-Reduktion auf kostengünstige Weise erzielt werden, die möglichst wenig fehleranfällig ist. Dabei soll bevorzugt eine Anwendung auch bei Brennern mit geringerem Wirkungsgrad effektiv möglich sein.

Diese Aufgabe wird durch eine Vorrichtung gemäß Anspruch 1 gelöst.

Die Aufgabe der Erfindung wird auf diese Weise vollkommen gelöst.

Da erfindungsgemäß das Abgas aus dem Brenner zunächst mittels eines Wärmetauschers gekühlt wird, bevor in dieses ein Additiv eingespritzt wird, und das Gemisch durch einen Katalysator zur NOx-Reduktion geleitet wird, wird das Abgas ausreichend gekühlt, so dass dieses eine Temperatur weitgehend im optimalen Temperaturbereich des verwendeten Katalysators hat und somit eine besonders wirkungsvolle NOx-Reduktion erfolgt. Ferner wird eine Beschädigung des Katalysators infolge von zu hohen Abgastemperaturen verhindert. Da die Brennerluft durch den Wärmetauscher vorgewärmt wird, wird hierbei gleichzeitig der Wirkungsgrad des Brenners verbessert.

Da erfindungsgemäß zusätzlich zur Zuführung des Additivs eine Zuführung von Kühlluft erfolgt, wird die Düse, über welche das Additiv zugeführt wird, ausreichend gekühlt, um eine Überhitzung zu vermeiden. Außerdem wird der Entstehung von Ablagerungen aus der Harnstofflösung im Einspritzbereich entgegengewirkt. Auf diese Weise ergibt sich eine hohe Zuverlässigkeit.

Erfindungsgemäß entsteht eine Injektorwirkung, die eine bessere Vermischung von Abgas mit dem verdüsten Additiv bewirkt, d.h. der Sprühnebel des Additivs wird besser in das Abgas eingemischt bzw. mitgerissen. Gleichzeitig wird der Entstehung von Ablagerungen vorgebeugt. Die austretende Ringspaltluft bildet eine Art zylindrischen Schleier um das verdüste Additiv.

Da der Ringspalt so bemessen ist und die Kühlluft aus dem Gebläse mit einem solchen Druck zuführbar ist, dass sich im Betrieb eine Austrittsgeschwindigkeit der Kühlluft von 20 m/s bis 60 m/s ergibt, ist eine ausreichende Kühlung der Düse in Kombination mit einer wirkungsvollen NOx-Reduzierung gewährleistet. Gleichzeitig werden kristalline Ablagerungen aus der Harnstofflösung im unmittelbaren Düsenaustrittsbereich weitestgehend verhindert.

Gemäß einer weiteren Ausgestaltung der Erfindung ist eine Steuerung vorgesehen, über welche die Menge des zugeführten Additivs steuerbar ist, wobei eine Zuführung nur dann erfolgt, wenn der mindestens eine Brenner eingeschaltet ist und vorzugsweise eine bestimmte Eintrittstemperatur am Katalysator erreicht ist.

Auf diese Weise wird eine wirkungsvolle NOx-Reduzierung gewährleistet.

In einer bevorzugten Weiterbildung der Erfindung ist ein Temperatursensor zur Überwachung der Abgastemperatur vorgesehen, der mit der Steuerung gekoppelt ist.

Gemäß einer weiteren Ausgestaltung der Erfindung ist die Steuerung dazu ausgebildet, die Menge des zugeführten Additivs in Abhängigkeit von dem bekannten bzw. empirisch ermittelten Abgasverhalten des mindestens einen Brenners zu steuern.

Da das Abgasverhalten des Brenners bekannt ist bzw. empirisch ermittelbar ist, kann die Menge des zugeführten Additivs in Abhängigkeit vom bekannten Abgasverhalten gesteuert werden, so dass eine optimale Menge von Additiv zugeführt wird, um eine möglichst gute NOx-Reduktion zu gewährleisten. Die Verwendung eines NOx-Sensors im Abgas ist hierzu nicht erforderlich. Gleichwohl kann ein NOx-Sensor zusätzlich verwendet werden, sofern dies gewünscht ist.

In weiterer Ausgestaltung der Erfindung ist die Steuerung mit einem Ventil gekoppelt, über dessen Öffnungszeit die Dosiermenge des zugeführten Additivs steuerbar ist.

Auf diese Weise ist eine präzise Dosierung der zugeführten Additivmenge auf den notwendigen Bedarf ermöglicht.

Gemäß einer weiteren Ausgestaltung der Erfindung ist die Steuerung für ein Brenner von 25 kW auf eine Öffnungszeit des Ventils von 2 ms bis 1000 ms, gefolgt von einer Pausenzeit von 1 s bis 30 s, vorzugsweise eine Öffnungszeit von 5 ms bis 30 ms, gefolgt von einer Pausenzeit von 1 s bis 10 s einstellbar.

Mit einer derartigen Dosierung ergibt sich bei Verwendung einer handelsüblichen Harnstoff-Wasser-Lösung, die unter der Bezeichnung AdBlue^{®} erhältlich ist, eine gute NOx-Reduktion.

Gemäß einer weiteren Ausgestaltung der Erfindung ist die Leistung des Brenners mittels eines Steuerorgans veränderbar, das mit der Steuerung zur Steuerung der Dosiermenge des zugeführten Additivs in Abhängigkeit von der eingestellten Brennerleistung gekoppelt ist.

Sofern die Brennerleistung variabel ist, kann auf diese Weise die benötigte Dosiermenge für das Additiv automatisch angepasst werden.

Gemäß einer weiteren Ausgestaltung der Erfindung ist im Abgasstrom des Wärmetauschers ein Metallschaum oder ein Metallgewebe vorgesehen.

Diese Maßnahme hat den Vorteil, dass einerseits die Wärmeübertragung des Wärmetauschers verbessert wird und andererseits der Metallschaum oder das Metallgewebe als Filter wirkt, das eine Reinigung des Abgases bewirkt, so dass eine Verschmutzung des Katalysators deutlich reduziert wird.

Gemäß einer weiteren Ausgestaltung der Erfindung sind mindestens zwei Brenner mit der Mischeinrichtung und dem Katalysator gekoppelt.

Da die Mischeinrichtung und der Katalysator einschließlich der zugehörigen Steuerung einen nicht unerheblichen Kostenfaktor darstellen, können auf diese Weise erhebliche Kosten eingespart werden, wenn zwei oder mehr Brenner mit einer gemeinsamen Mischeinrichtung und einem Katalysator gekoppelt werden. Sofern die Abgastemperatur nicht zu hoch ist, so kann hierbei gleichzeitig auch ein gemeinsamer Wärmetauscher verwendet werden.

Erfindungsgemäß kann kostengünstig ein handelsübliches Mischrohr in Form eines T-Stückes verwendet werden, über dessen zentralen Einlass das Additiv in einem Winkel von 90° zuführbar ist. Grundsätzlich sind auch andere Zuführwinkel denkbar.

Gemäß einer weiteren Ausgestaltung der Erfindung ist am Flansch ein Gehäuse vorgesehen, in dem eine Düse zur Einspritzung des Additivs aufgenommen ist, und das mit einer Fluidkühlung versehen ist, vorzugsweise mittels Kühlluft.

Durch die zusätzliche Kühlung des Gehäuses mittels einer Fluidkühlung wird einer Überhitzung der Mischeinrichtung im Bereich der Düse entgegengewirkt.

Gemäß einer weiteren Ausgestaltung der Erfindung erfolgt eine Dosierung des Additivs nur dann, wenn der Brenner eingeschaltet ist und das Abgas eine Mindesttemperatur aufweist.

Auf diese Weise ist gewährleistet, dass nicht versehentlich in kaltem Zustand Additiv zudosiert wird, was zu einer Beschädigung der Einrichtung führen könnte.

Gemäß einer weiteren Ausgestaltung der Erfindung wird die zugeführte Menge des Additivs in Abhängigkeit von der Brennerleistung und der bekannten Abgaszusammensetzung gesteuert.

Auf diese Weise ist eine optimale Dosierung des zugeführten Additivs gewährleistet, um eine möglichst gute NOx-Reduktion zu erreichen. Hierbei besteht keine Notwendigkeit, die Abgaszusammensetzung zu messen, da der Brenner im stationären Betrieb arbeitet und die Abgaszusammensetzung in Abhängigkeit von der Brennerleistung bekannt ist.

In zusätzlicher Weiterbildung der Erfindung wird die Düse zusätzlich durch eine Fluidkühlung gekühlt. Hierbei reicht eine Kühlung mit Luft aus, um die notwendige Kühlwirkung zu gewährleisten.

Auf diese Weise wird einer Überhitzung der Düse wirkungsvoll entgegengewirkt.

Es versteht sich, dass die vorstehend genannten und die nachstehend noch zu erläuternden Merkmale der Erfindung nicht nur in der jeweils angegebenen Kombination sondern auch in anderen Kombinationen oder in Alleinstellung der Erfindung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine erste Ausführung einer erfindungsgemäßen Vorrichtung in schematischer Darstellung;
- Fig. 2: eine vergrößerte Darstellung der Mischeinrichtung zum Einspritzen des Additivs gemäß Fig. 1 und
- Fig. 3: eine schematische Darstellung einer Vorrichtung mit drei Brennern, die mit einem gemeinsamen Wärmetauscher und einer nachgeschalteten Mischeinrichtung und einem Katalysator gekoppelt sind, in vereinfachter schematischer Darstellung; und
- Fig. 4: eine Darstellung eines Entwurfes einer Vorrichtung zur Abgasreinigung eines ETAMAT-Brenners, so wie von den Herren Wolf und Rakette auf dem Symposium THERMPROCESS in Düsseldorf, in der Zeit vom 26.-28. Juni 2019 in einem Vortrag präsentiert.

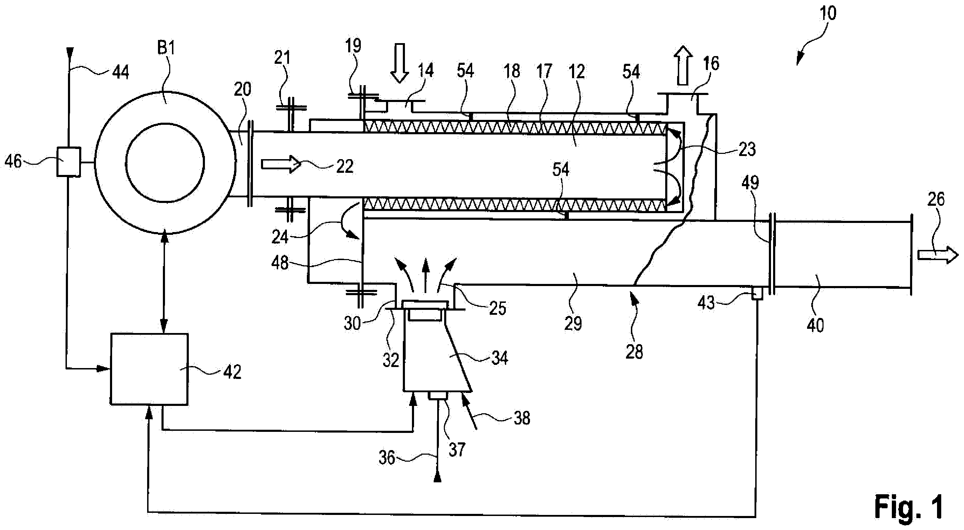

Eine erfindungsgemäße Vorrichtung ist in Fig. 1 dargestellt und insgesamt mit der Ziffer 10 bezeichnet. Die Vorrichtung 10 weist einen Brenner B1 auf, an dessen Abgasleitung 20 ein Wärmetauscher 12 angeschlossen ist. Der Wärmetauscher 12 ist von einer Mischeinrichtung 28 gefolgt, in der ein Additiv, in Form einer Harnstoff-Wasser-Lösung in das Abgas eingedüst wird. Daran schließt sich ein SCR-Katalysator 40 an.

Für den Wärmetauscher 12 sind die verschiedensten Ausführungen möglich (z.B. Glattrohr, Rippen, Noppen, Zacken, andere Erhöhungen und Vertiefungen auf der Oberfläche, sowie Geflecht oder Schaum). Durch eine Variation der Dimensionierung und Ausführungsform des Wärmetauschers 12 kann die Abkühlung des Abgases beeinflusst werden und zwar so, dass der bevorzugte Temperaturarbeitsbereich des nachgeschalteten Katalysators 40 erreicht wird.

Der Wärmetauscher 12 ist mit Außenluft gekühlt, welche über einen Eintrittsstutzen 14 in den Wärmetauscher 12 eintritt und über einen Austrittsstutzen 16 austritt. Im Wärmetauscher 12 heizt sich die Kühlluft auf und wird dem Brenner B1 als vorgewärmte Verbrennungsluft zugeführt. Dabei wird das aus der Abgasleitung 20 in Richtung des Pfeiles 22 austretende Abgas auf eine Temperatur abgekühlt, die bevorzugt im Bereich von 250 bis 350°C liegt.

Auf der Luftseite werden zur besseren Strömungsführung und damit Verbesserung des Wirkungsgrades um das abgasführende Rohr 17 Leitbleche 54 angebracht.

Das Abgas tritt in Richtung der Pfeile 23 durch eine Schaummatte 18 aus Metallschaum hindurch, die das abgasführende Rohr 17 umgibt. Dadurch wird der Wärmeaustausch verbessert und gleichzeitig das Abgas gefiltert, so dass das Abgas 24 nach dem Austritt in Richtung des Pfeiles 24 beim Eintritt in eine nachfolgende Mischeinrichtung 28 zumindest teilweise gereinigt ist. So wird einer Verschmutzung des Katalysators 40 vorgebeugt.

Die Schaummatte 18 bzw. der Metallschaum kann ausgetauscht werden, wozu entsprechende Verschraubungen 19 bzw. 21 vorgesehen sind.

In der Mischeinrichtung 28 wird das Additiv in Form einer Harnstoff-Wasser-Lösung über einen seitlichen Einlass 30 mit einem Flansch 32 über eine Zuführeinrichtung 34 eingespritzt. Von der Mischeinrichtung 28 gelangt das Abgas schließlich in den SCR-Katalysator 40, aus dem es in Richtung eines Pfeiles 26 austritt.

Mit der Ziffer 42 ist eine Steuerung angedeutet, die mit dem Brenner B1 gekoppelt ist und über welche die Zuführung von Harnstoff-Wasser-Lösung mittels der Zuführeinrichtung 34 in die Mischeinrichtung 28 gesteuert wird. Die Zuführeinrichtung 34 ist bei 36 mit einer Additivzufuhr aus einem zugehörigen Tank gekoppelt und weist ein Ventil 37 auf, das von der Steuerung 42 gesteuert wird.

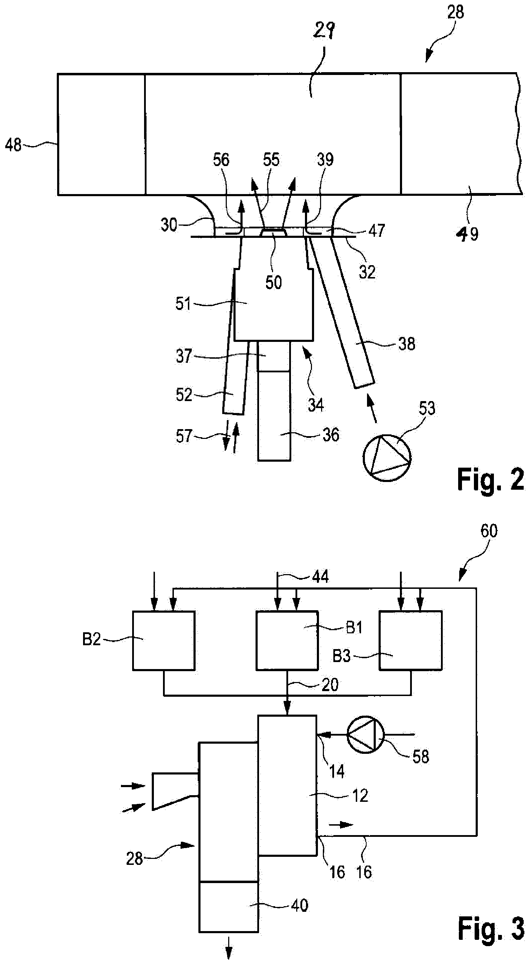

Zusätzlich wird bei 38 Luft unter Druck in die Zuführeinrichtung 34 und schließlich in die Mischeinrichtung 28 zugeführt, wie nachfolgend anhand von Fig. 2 noch näher erläutert wird.

Sofern die Leistung des Brenners B1 steuerbar ist, so ist dieser mit einer Brennstoffzufuhr 44 über ein Steuerorgan 46 (z.B. Klappe oder Ventil) gekoppelt. Das Steuerorgan 46 ist mit der Steuerung 42 gekoppelt, um eine Anpassung der Additivzufuhr bei veränderter Brennerleistung zu ermöglichen.

Am Ausgang 49 der Mischeinrichtung 28 ist ferner ein Temperatursensor 43, etwa in Form eines Thermoelementes, vorgesehen, dessen Signal der Steuerung 42 zugeführt ist.

Der Aufbau der Mischeinrichtung 28 wird nachfolgend anhand von Fig. 2 näher erläutert.

Die Mischeinrichtung 28 weist ein Mischrohr 29 auf, in dessen Eingang 48 das aus dem Wärmetauscher 12 austretende Abgas eingeleitet wird. In einem Winkel von 90° ist am Mischrohr 29 ein seitlicher Einlass 30 vorgesehen, an dem ein Flansch 32 aufgenommen ist. Am Flansch 32 ist die Zuführeinrichtung 34 mit einem Gehäuse 51 aufgenommen. Im Gehäuse 51 ist mittig eine Düse 50 gehalten, aus der Additiv aus der angeschlossenen Additivzufuhr 36 über das Ventil 37 in das Mischrohr eingedüst werden kann, wie bei 55 durch Pfeile angedeutet.

Am Flansch 32 ist eine Doppelplatte 47 vorgesehen. In den in der Doppelplatte 47 gebildeten Hohlraum strömt Kühlluft 38 aus einem seitlichen Eintrittsstutzen 38 unter Druck ein. Aus diesem Hohlraum tritt die Kühlluft, wie bei 56 angedeutet, über einen Ringspalt 39, der konzentrisch zur Düse 50 angeordnet ist, in das Mischrohr 29 aus.

Durch die aus dem Ringspalt 56 austretende Luft entsteht eine Injektorwirkung, die eine gute Vermischung von Abgas mit dem verdüsten Additiv bewirkt, d.h. der Sprühnebel der Additivlösung wird besonders gut in das Abgas eingemischt bzw. mitgerissen. Gleichzeitig wird einer Entstehung von Ablagerungen vorgebeugt. Die austretende Ringspaltluft bildet eine Art zylindrischen Schleier um die verdüste Additivlösung.

Das Gehäuse 51 ist zusätzlich mittels Druckluft gekühlt. Die zugehörige Kühlluftleitung 52 ist schräg seitlich an das Gehäuse 51 angeschlossen. Wie durch die Pfeile 57 angedeutet, tritt Kühlluft über die Kühlluftleitung 52 in das Gehäuse 51 ein, ist durch einen Kühlluftkanal (nicht dargestellt) geführt und wird über die Kühlluftleitung 52 wieder abgeführt.

Die dem Eintrittsstutzen 38 zugeführte Kühlluft sowie die Kühlluft für das Gehäuse 51, die bei 52 zugeführt wird, werden dem Verbrennungsluftgebläse entnommen, das die Verbrennungsluft dem Brenner B1 zuführt. Das Gebläse, das natürlich mit dem Brenner B1 gekoppelt ist (hier nicht dargestellt), ist hier beispielhaft bei 53 angedeutet.

Die Bereitstellung des Additivs, das dem Ventil 37 zugeführt wird, erfolgt über einen Druckspeicher 112, der aus einem Tank 115 mittels einer Pumpe 114 auf einem bestimmten Druck gehalten wird, wie zuvor anhand von Fig. 4 erläutert. Zur Einhaltung des Druckes ist ein Druckwächter 111 vorgesehen, der mit der Steuerung gekoppelt ist (vgl. 113 gemäß Fig. 4 bzw. 42 bei dem erfindungsgemäßen System gemäß Fig. 1).

Die über den Eintrittsstutzen 38 zugeführte Kühlluft gelangt vor dem Katalysator in den Abgasstrom, während die Gehäusekühlluft, die durch die Kühlluftleitung 52 geführt ist, nach dem Katalysator 40 an die Umgebung abgegeben wird und somit den SCR-Prozess nicht beeinflusst.

Der Wärmetauscher 12 kühlt das Abgas - vorteilhaft im Gegenstrom - ab und wärmt die Verbrennungsluft für den Brenner B1 vor. Der Katalysator 40 besteht aus drei Abschnitten zur Hydrolyse, SCR und zur Oxidation (Sperrkat).

Da der Brenner B1 im stationären Betrieb läuft und somit die Abgaszusammensetzung bekannt ist, kann die notwendige Einspritzmenge des Additivs von der Steuerung in geeigneter Weise dosiert werden, um eine optimale NOx-Reduzierung zu erreichen. Dabei wird die Einspritzmenge über das Ventil 37 taktweise gesteuert, indem die Eindüszeit bzw. nachfolgende Pausenzeit entsprechend eingestellt wird.

Die Öffnungszeit des Ventils 37 liegt im Bereich von 2 ms bis 1000 ms, jeweils gefolgt von einer Pausenzeit von 1 bis 30 Sekunden. Für eine Brennerleistung von z.B. 25 kW liegt die Öffnungszeit beispielsweise bei etwa 13 ms, jeweils gefolgt von einer Pausenzeit von 5 Sekunden. Bei höheren Brennerleistungen und damit höherer Abgasmenge erfolgt eine entsprechende Erhöhung der Eindüszeit bzw. Verkürzung der Pausenzeit. Eine Regelung entsprechend gemessener Abgaswerte (z.B. über einen NOx-Sensor) ist nicht erforderlich, kann jedoch optional vorgesehen sein.

Sollte eine Veränderung der Brennerleistung erforderlich sein (z.B. eine kontinuierliche und/oder gestufte Regelung der Brennerleistung), so wird in Abhängigkeit der Brennerleistung die Eindüsmenge des Additivs auf die Weise variiert, dass über die Stellung eines Steuerorgans 46, über das die Brennstoffzufuhr in den Brenner B1 erfolgt, die Steuerung 42 eine entsprechende Öffnungs- und Pausenzeit des Ventils 37 vorgibt.

Der Ringspalt 39 um die Düse 50 ist so bemessen, dass sich eine Austrittsgeschwindigkeit von etwa 10 bis 100 m/s, vorzugsweise von 20 bis 60 m/s ergibt. Hierdurch wird eine ausreichende Kühlung der Zuführeinrichtung 34 bewirkt und gleichzeitig eine optimierte Injektorwirkung erreicht.

In Fig. 3 ist eine weitere Ausführungsvariante der Erfindung dargestellt und insgesamt mit der Ziffer 60 bezeichnet.

Hierbei wird eine Mehrzahl von Brennern B1, B2, B3 mit einem gemeinsamen Wärmetauscher 12, einer gemeinsamen Mischeinrichtung 28 und einem gemeinsamen Katalysator 40 betrieben.

Auf diese Weise können mehrere Brenner B1, B2, B3 kostengünstig mit einer Abgasreinigung betrieben werden. Sofern die Abgastemperatur an den Brennern B1, B2, B3 nicht zu hoch ist, reicht ein gemeinsamer Wärmetauscher 12 aus, an den die Abgasleitungen 20 aller Brenner B1, B2, B3 angeschlossen sind. Sollte die Brennerleistung zu hoch sein, so werden ggf. einzelne Wärmetauscher für jeden einzelnen Brenner oder für mehrere Brenner vorgesehen.

In Fig. 3 ist mit 58 das Gebläse angedeutet, über welches die Zuluft in den Eintrittsstutzen des Wärmetauschers 12 geleitet wird. Die vorgewärmte Luft, die bei 16 aus dem Austrittsstutzen des Wärmetauschers 12 austritt, wird den Brennern B1, B2, B3 als Verbrennungsluft zugeführt. Die Brennstoffzufuhr für jeden Brenner B1, B2, B3 ist bei 44 angedeutet.

Beim Zusammenschluss mehrerer Brenner B1, B2, B3 mit einer gemeinsamen Abgasreinigung wird der apparative Aufwand deutlich reduziert.

Dabei erfolgt die Steuerung der Eindüsmenge von Additiv in Abhängigkeit der vorliegenden Brenner-Ein-Signale (Aufsummierung vorhandener Brenner-Ein-Signale) und Kopplung des Signals der erforderlichen Temperatur des Abgases für die ordnungsgemäße Funktion des Katalysators. Eine Eindüsung erfolgt also nur, wenn ein Brenner-Ein-Signal vorliegt und die Temperatur die vorgeschriebene Mindesttemperatur erreicht hat. Die Öffnungszeiten bzw. nachfolgende Pausenzeiten werden in Abhängigkeit von der angeschlossenen Brennerleistung und in Abhängigkeit von der Anzahl der eingeschalteten Brenner, welche die erforderliche Abgastemperatur erreicht haben, von der Steuerung 42 entsprechend eingestellt. Bei höheren Brennerleistungen und damit größerer Abgasmenge erfolgt eine entsprechende Verlängerung der Öffnungszeit pro Takt bzw. eine Verkürzung der Pausenzeit.

Es versteht sich, dass dann, wenn der betreffende Brenner bereits ohne einen zusätzlichen Wärmetauscher die gewünschte Abgastemperatur im optimalen Temperaturbereich von z.B. 250 bis 350°C erreicht, auf die Vorschaltung eines Wärmetauschers verzichtet werden kann.

## Patentansprüche

1. Vorrichtung zur Abgasreinigung eines Brenners (B1, B2, B3), mit einer Mischeinrichtung (28), in der ein flüssiges Additiv, insbesondere eine Harnstoff-Wasser-Lösung, in das Abgas eindüsbar ist, wobei der Ausgang der Mischeinrichtung (28) mit einem Katalysator (40) zur NOx-Reduktion mittels SCR gekoppelt ist, wobei die Mischeinrichtung (28) ein Mischrohr (29) mit einem Eingang (48) und einem Ausgang (49) aufweist, das einen bevorzugt seitlich angeordneten Einlass (30) zur Zuführung des Additivs und zur Zuführung von Kühlluft aufweist, **dadurch gekennzeichnet, dass** ein seitlicher Flansch (32) vorgesehen ist, der einen zentralen Einlass (50) zur Zuführung des Additivs, vorzugsweise in einem Winkel von 90°, und einen Anschluss (38) zur Zuführung von Kühlluft aufweist, dass am Flansch (32) ein konzentrisch zur Düse (50) angeordneter Ringspalt (39) vorgesehen ist, über den Kühlluft von außen in den Abgasstrom zuführbar ist, und dass ein Gebläse (53) vorgesehen ist, aus welchem die Kühlluft unter Druck in den Abgasstrom zuführbar ist, wobei der Ringspalt (39) so bemessen ist und die Kühlluft aus dem Gebläse (53) mit einem solchen Druck zuführbar ist, dass sich im Betrieb eine Austrittsgeschwindigkeit der Kühlluft von 20 m/s bis 60 m/s ergibt.

2. Vorrichtung nach Anspruch 1, bei welcher am Flansch (32) ein Gehäuse (34) vorgesehen ist, in dem eine Düse (50) zur Einspritzung des Additivs aufgenommen ist, und das mit einer Fluidkühlung versehen ist, vorzugsweise mittels Kühlluft.

3. Vorrichtung nach einem der vorhergehenden Ansprüche, mit einem Wärmetauscher (12), der mit mindestens einem Brenner (B1, B2, B3) zur Kühlung des Abgases aus dem Brenner (B1, B2, B3) und zur Vorwärmung der Brennerluft gekoppelt ist, wobei die Abgasleitung (20) nach dem Austritt aus dem Wärmetauscher (12) mit der Mischeinrichtung (28) gekoppelt ist.

4. Vorrichtung nach Anspruch 3, mit einem Temperatursensor (43) zur Überwachung der Abgastemperatur und mit einer Steuerung (42), die mit dem Temperatursensor (43) gekoppelt ist, wobei die Steuerung (42) zur Steuerung der Menge des zugeführten Additivs ausgebildet ist, wobei eine Zuführung vorzugsweise nur dann erfolgt, wenn der mindestens eine Brenner (B1, B2, B3) eingeschaltet ist und eine bestimmte Eintrittstemperatur am Katalysator (40) erreicht ist.

5. Vorrichtung nach Anspruch 4, bei welcher die Steuerung (42) dazu ausgebildet ist, die Menge des zugeführten Additivs in Abhängigkeit von einem empirisch ermittelten Abgasverhalten des mindestens einen Brenners (B1, B2, B3) zu steuern.

6. Vorrichtung nach Anspruch 4 oder 5, bei welcher die Steuerung (42) mit einem Ventil (37) gekoppelt ist, über dessen Öffnungszeit die Dosiermenge des zugeführten Additivs steuerbar ist.

7. Vorrichtung nach Anspruch 6, bei welcher die Steuerung (42) für einen Brenner von 25 kW auf eine Öffnungszeit des Ventils (37) von 2 Millisekunden bis 1000 Millisekunden, gefolgt von einer Pausenzeit von 1 Sekunde bis 30 Sekunden, vorzugsweise 5 Millisekunden bis 30 Millisekunden, gefolgt einer Pausenzeit von 2 bis 10 Sekunden einstellbar ist.

8. Vorrichtung nach einem der Ansprüche 4 bis 7, bei welcher die Leistung des Brenners (B1, B2, B3) mittels eines Steuerorgans (46) veränderbar ist, das mit der Steuerung (42) zur Steuerung der Dosiermenge des zugeführten Additivs in Abhängigkeit von der eingestellten Brennerleistung gekoppelt ist.

## Claims

1. Device for the waste gas purification of a burner (B1, B2, B3), having a mixing apparatus (28) in which a liquid additive, in particular a urea-water solution, can be injected into the waste gas, wherein the outlet of the mixing apparatus (28) is coupled to a catalytic converter (40) for the NOx reduction by means of SCR, wherein the mixing apparatus (28) comprises a mixing tube (29) with an inlet (48) and with an outlet (49), which comprises an inlet (30) preferably arranged laterally for supplying the additive and for supplying cooling air, **characterized in that** a lateral flange (32) is provided, which comprises a central inlet (50) for supplying the additive, preferentially at an angle of 90°, and a connection (38) for supplying cooling air, **in that** on the flange (32) an annular gap (39) arranged concentrically to the nozzle (50) is provided, via which cooling air from the outside can be supplied into the waste gas flow, and **in that** a blower (53) is provided, from which the cooling air under pressure can be supplied into the waste gas flow, wherein the annular gap (39) is dimensioned in such a way, and the cooling air from the housing (53) can be supplied with such a pressure, that during the operation an outlet velocity of the cooling air of 20 m/s to 60 m/s is obtained.

2. Device according to Claim 1, at which on the flange (32) a housing (34) is provided, in which a nozzle (50) for injecting the additive is received and which is provided with a fluid cooling, preferentially by means of cooling air.

3. Device according to either of the preceding claims, having a heat exchanger (12) which is coupled to at least one burner (B1, B2, B3) for cooling the waste gas from the burner (B1, B2, B3) and for preheating the burner air, wherein the waste gas line (20) after the exit from the heat exchanger (12) is coupled to the mixing apparatus (28).

4. Device according to Claim 3, having a temperature sensor (43) for monitoring the waste gas temperature and having a control (42), which is coupled to the temperature sensor (43), wherein the control (42) is configured for controlling the quantity of the supplied additive, wherein a supply preferentially takes place only when the at least one burner (B1, B2, B3) is switched on and a certain inlet temperature on the catalytic converter (40) has been reached.

5. Device according to Claim 4, with which the control (42) is configured in order to control the quantity of the supplied additive as a function of empirically determined waste gas characteristics of the at least one burner (B1, B2, B3).

6. Device according to Claim 4 or 5, with which the control (42) is coupled to a valve (37), via the opening time of which the metered quantity of the supplied additive is controllable.

7. Device according to Claim 6, with which the control (42) for a burner of 25 kW can be set to an opening time of the valve (37) of 2 milliseconds to 1000 milliseconds, followed by an interval time of 1 second to 30 seconds, preferentially 5 milliseconds to 30 milliseconds, followed by an interval time of 2 to 10 seconds.

8. Device according to any one of Claims 4 to 7, with which the output of the burner (B1, B2, B3) is variable by means of a control element (46), which is coupled to the control (42) for controlling the metered quantity of the supplied additive as a function of the set burner output.

## Revendications

1. Dispositif d'épuration des gaz d'échappement d'un brûleur (B1, B2, B3), avec un appareil de mélange (28) dans lequel un additif liquide, notamment une solution d'urée et d'eau, peut être injecté dans les gaz d'échappement, la sortie de l'appareil de mélange (28) étant couplée à un catalyseur (40) pour la réduction des NOx au moyen de la SCR, l'appareil de mélange (28) présentant un tube de mélange (29) avec une entrée (48) et une sortie (49), qui présente une entrée (30) agencée de préférence latéralement pour l'amenée de l'additif et pour l'amenée d'air de refroidissement, **caractérisé en ce qu'**il est prévu une bride latérale (32), qui présente une entrée centrale (50) pour l'amenée de l'additif, de préférence selon un angle de 90°, et un raccord (38) pour l'amenée d'air de refroidissement, **en ce qu'**il est prévu sur la bride (32) une fente annulaire (39) agencée concentriquement à la buse (50), par le biais de laquelle de l'air de refroidissement peut être amené de l'extérieur dans le courant de gaz d'échappement, et **en ce qu'**il est prévu une soufflante (53) à partir de laquelle l'air de refroidissement peut être amené sous pression dans le courant de gaz d'échappement, la fente annulaire (39) étant dimensionnée et l'air de refroidissement pouvant être amené à partir de la soufflante (53) avec une pression telle qu'il en résulte en fonctionnement une vitesse de sortie de l'air de refroidissement de 20 m/s à 60 m/s.

2. Dispositif selon la revendication 1, dans lequel il est prévu un boîtier (34) sur la bride (32), dans lequel est logée une buse (50) pour l'injection de l'additif, et qui est pourvu d'un refroidissement par fluide, de préférence au moyen d'air de refroidissement.

3. Dispositif selon l'une quelconque des revendications précédentes, avec un échangeur de chaleur (12) couplé à au moins un brûleur (B1, B2, B3) pour refroidir les gaz d'échappement du brûleur (B1, B2, B3) et préchauffer l'air du brûleur, le conduit de gaz d'échappement (20) étant couplé à l'appareil de mélange (28) après la sortie de l'échangeur de chaleur (12).

4. Dispositif selon la revendication 3, avec un capteur de température (43) pour surveiller la température des gaz d'échappement et avec une commande (42) qui est couplée au capteur de température (43), la commande (42) étant configurée pour commander la quantité d'additif amenée, une amenée n'ayant lieu de préférence que lorsque l'au moins un brûleur (B1, B2, B3) est allumé et qu'une température d'entrée déterminée est atteinte au niveau du catalyseur (40).

5. Dispositif selon la revendication 4, dans lequel la commande (42) est configurée pour commander la quantité d'additif amenée en fonction d'un comportement des gaz d'échappement de l'au moins un brûleur (B1, B2, B3) déterminé de manière empirique.

6. Dispositif selon la revendication 4 ou 5, dans lequel la commande (42) est couplée à une soupape (37) dont le temps d'ouverture permet de commander la quantité de dosage de l'additif amené.

7. Dispositif selon la revendication 6, dans lequel la commande (42) est réglable pour un brûleur de 25 kW sur un temps d'ouverture de la soupape (37) de 2 millisecondes à 1 000 millisecondes, suivi d'un temps de pause de 1 seconde à 30 secondes, de préférence de 5 millisecondes à 30 millisecondes, suivi d'un temps de pause de 2 à 10 secondes.

8. Dispositif selon l'une quelconque des revendications 4 à 7, dans lequel la puissance du brûleur (B1, B2, B3) est modifiable au moyen d'un organe de commande (46) couplé à la commande (42) pour commander la quantité de dosage de l'additif amené en fonction de la puissance réglée du brûleur.
